# EUROPEAN PATENT APPLICATION

(11) **EP 2 492 850 A1**
(43) Date of publication of application: **29.08.2012**
(21) Application number: 10824490.6
(22) Date of filing: 08.10.2010
(51) Int. Cl.: G06N 3/00

(54) **SOCIAL ROBOT**

(30) Priority: 21.10.2009 ES 200902021
(71) Applicant: Thecorpora, S.L., 28042 Madrid (ES)
(72) Inventor: PAZ RODRIGUEZ, Francisco Javier, E-28042 Madrid (ES)
(74) Representative: Cabinet Plasseraud
(86) International application number: PCT/ES2010/000409
(87) International publication number: WO 2011/048236

(57) **Abstract**

Social robot formed by an artificial vision system composed of webcam cameras (3), a voice recognition system formed by three microphones (4) arranged in a triangular configuration, an expression system composed of an LED matrix, formed by a plurality of LEDs and a status LED, and eyelids (6) formed by half-moons connected to gearwheels which engage with respective servomotors via transmission wheels, a speech synthesis system composed of loudspeakers (7), a system for detecting obstacles which is formed by ultrasound sensors (8), and a movement system formed by two driving wheels (9).

## Description

### Field of the Art

The present invention relates to domestic robotics platforms for personal use, proposing a social robot which is capable of interacting with the environment surrounding it, learning from same.

### State of the Art

The term robot is understood as any computer-controlled machine programmed for moving, handling objects and working while at the same time interacting with the environment surrounding it.

Robotics was initially aimed at creating automatisms which facilitate industrial work that must be performed by human beings in their workplace, mainly performing all those tasks which were repetitive, tedious and dangerous in a preprogrammed manner.

In the recent years, microelectronics advancement, computer development, control theory development and the availability of electromechanical and hydromechanical servomechanisms, among others, have been a key factor for robotics evolution, giving rise to a new generation of automatons called social robots.

Social robots are those capable of developing emotional and cognitive activities, interacting and communicating with people in a simple and pleasant manner following a series of behaviors, patterns and social norms.

In the latter respect, advancements in the field of robotics have been directed to the development of biped robots with human appearance that facilitates interrelations, and with a precise mechanical structure conferring them with specific physical locomotion and handling skill, this being the case of Honda's known robot "Asimo", in this sense, Sony's robot "Aibo" which resembles a pet but which also has a complex mechanical structure is also known.

Even though robots of this type have sensory systems to perceive the environment surrounding them and are capable of interacting with human beings, their self expressions are limited and their performance is limited to simple responses with respect to the user's actions, therefore developing intelligent social robots which can efficiently relate with human beings and with other robots by means of a suitable expression system and which likewise can learn from those interrelations being necessary.

### Object of the Invention

The present invention proposes a social robot for personal use having suitable means allowing it to relate efficiently with the environment surrounding it while at the same time learning from those interrelations.

The robot object of the invention is made up of a head in its upper part in which head there is located an artificial vision system made up of two webcam cameras in the form of eyes, a voice recognition system formed by three microphones in a triangular arrangement and an expression system made up of an array of LEDs and eyelids arranged around the webcam cameras in the form of eyes.

In the lower part of the robot there is arranged a body, in which there is located a speech synthesis system made up of two loudspeakers arranged at either sides of the body, an obstacle detection system made up of ultrasound sensors and a system for moving the robot made up of two side working wheels and a smaller central guide wheel.

The robot has a motherboard with an open source operating system controlling the entire unit, this motherboard being connected to a controller board which receives the signals from the artificial vision system and controls the speech synthesis system, the obstacle detection system, the system for movement and the eyelids of the expression system and this controller board in turn acts as a connecting bridge connecting the motherboard and another controller board which receives the signals from the voice recognition system and controls the array of LEDs of the expression system.

A fully autonomous universal robotics platform which, due to its constructive and functional features, is very advantageous for performing its intended application, properly relating with the environment surrounding it and learning from that interrelation, is thus obtained.

### Description of the Drawings

Figure 1 is a front perspective view of the social robot object of the invention.
Figure 2 is a rear perspective view with respect to the above figure.

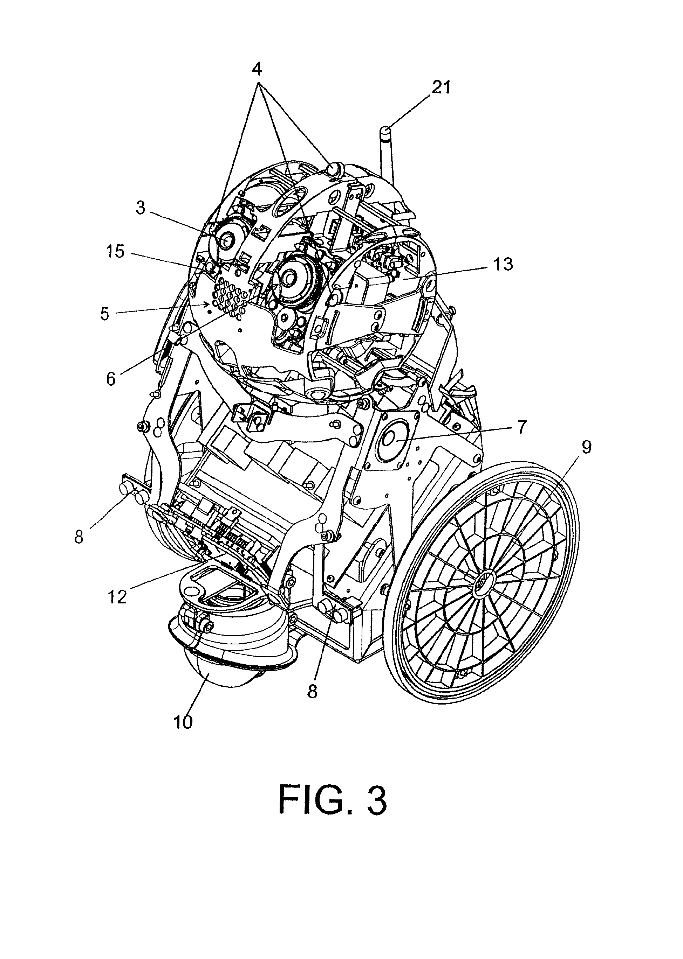

Figure 3 is a front perspective view of the inside of the robot.

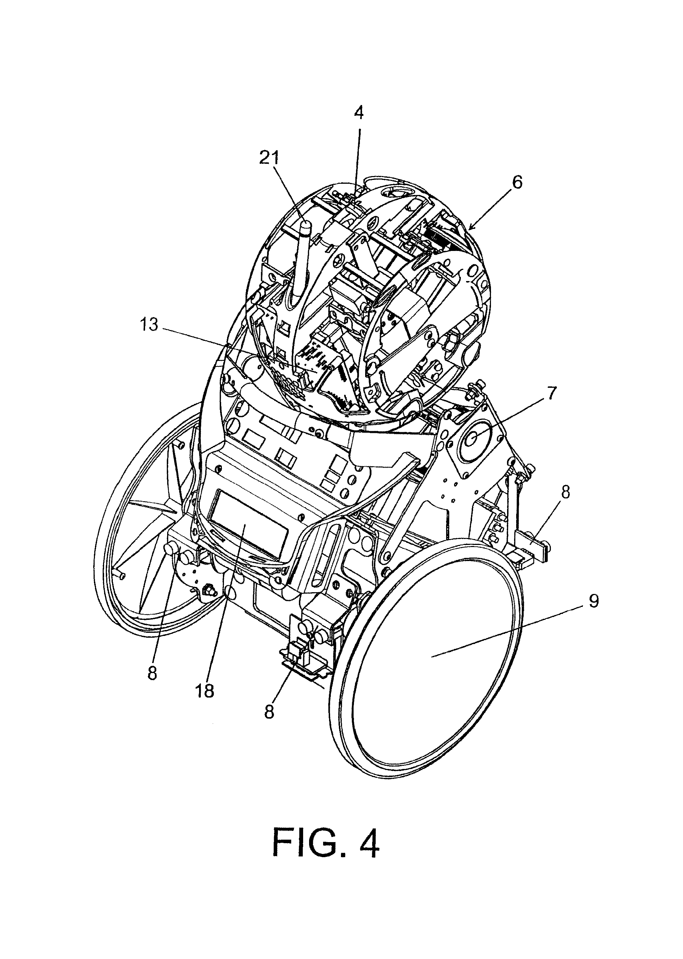

Figure 4 is a rear perspective view of the inside of the robot.
Figure 5.1 is a detailed view of one of the eyelids of the expression system of the robot.
Figure 5.2 shows a detailed view of the array of LEDs of the expression system of the robot.
Figure 6 shows a perspective view of the two servomotors driving the movement of the head of the robot.
Figure 7 is a schematic view of one of the controller boards of the functional unit of the robot.
Figure 8 is a schematic view of the other controller board of the functional unit.
Figure 9 is a general diagram of the connection of the different devices of the robot with the controller boards.

### Detailed Description of the Invention

The object of the invention relates to a universal robotics platform in the form of a social robot, fully autonomous and programmed in open source, which has means suitable for interrelating with the environment surrounding it.

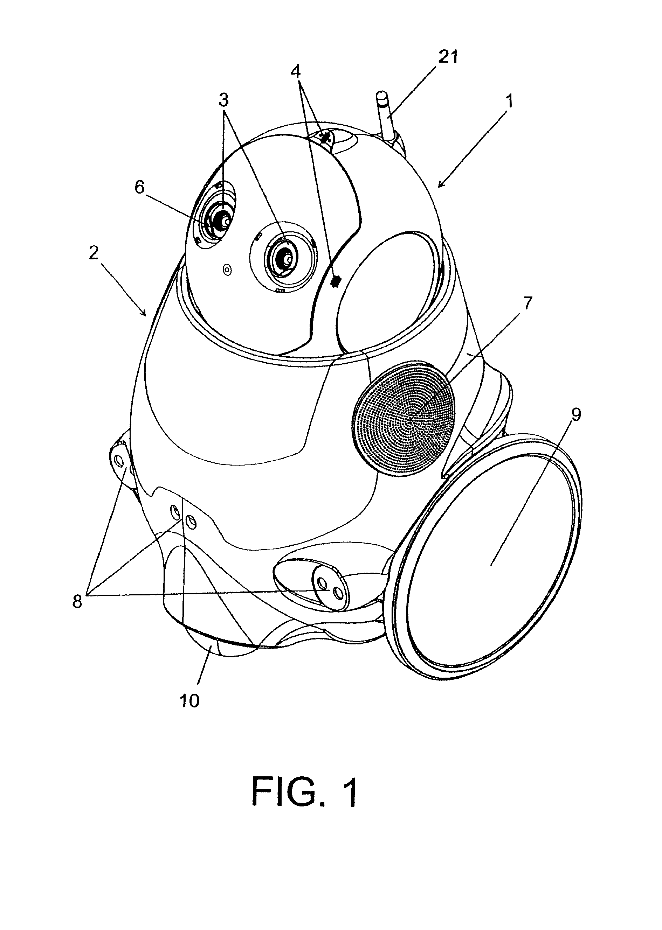

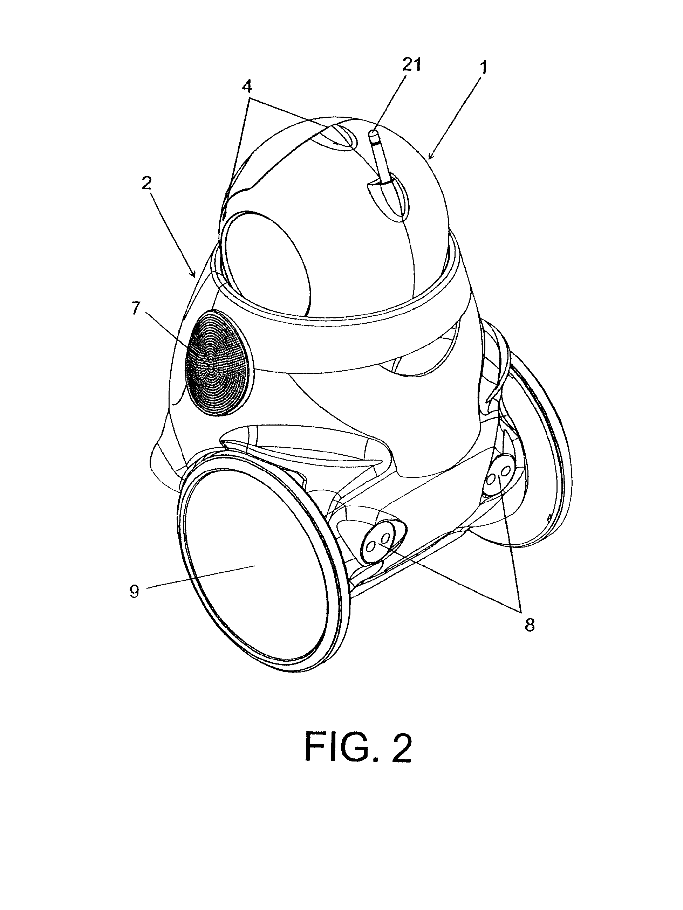

Figures 1 and 2 show the robot object of the invention, which is made up a spherical head (1) in its upper part and of a body (2) in its lower part, an artificial vision system made up of webcam cameras (3) resembling eyes, a voice recognition system formed by microphones (4) arranged in a triangular configuration, and an expression system made up of an array of LEDs (5) resembling the nose and mouth of the robot and eyelids (6) arranged around the webcam cameras (3) in the form of eyes being located inside the head (1).

In the body (2) of the robot there is incorporated a speech synthesis system made up of loudspeakers (7) located at either sides of the body (2), an obstacle detection system made up of several ultrasound sensors (8), and a system for moving the robot formed by two working wheels (9) guided by a smaller central wheel (10).

Inside the body (2) of the robot there is arranged a motherboard (11) with an open source operating system where all the functions for controlling the robot are executed, a controller board (12) which is located inside the body (2) of the robot in its front part being connected to this motherboard (11), this controller board (12) acting as a connecting bridge for connecting to another controller board (13) which is located in the rear inner part of the head (1) of the robot.

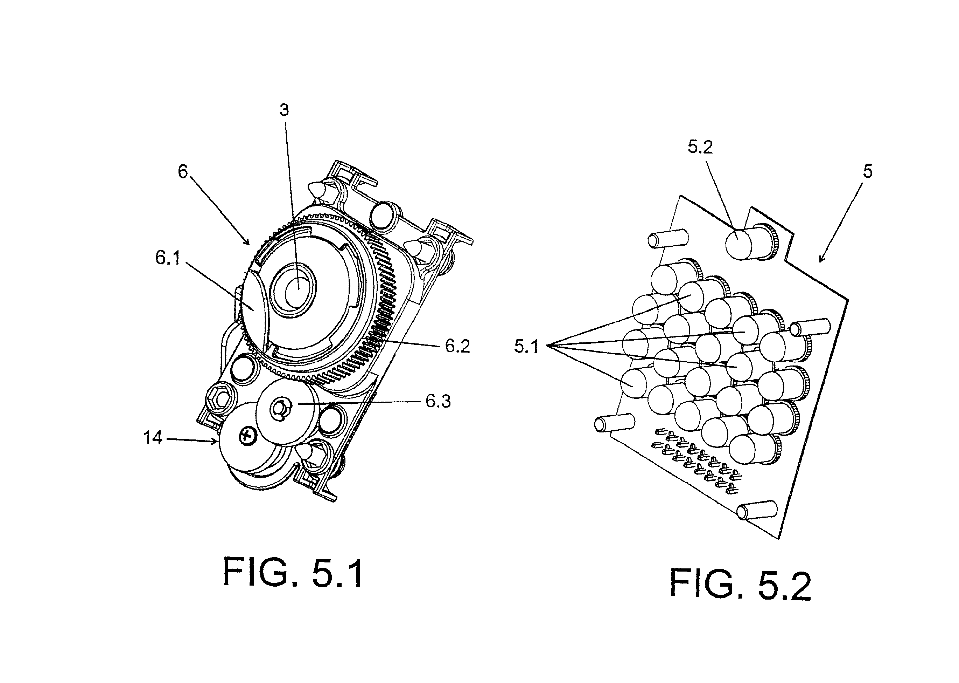

As can be observed in Figure 5.1, the eyelids (6) of the expression system are formed by a crescent-shaped piece (6.1) associated with a cogwheel (6.2) meshing with respective servomotors (14 and 15) through a drive wheel (6.3). Depending on the position of the crescent-shaped piece (6.1) it can render different expressions to the robot's face, therefore, if the crescent-shaped pieces (6.1) are in an upper position the robot adopts a happy expression, if they are in a lower position it adopts a sad expression and if they are, for example, in an intermediate position it adopts a neutral expression.

The array of LEDs (5) is formed by a plurality of LEDs (5.1) which by means of their selective lighting express the emotional state of the robot, and by a status led (5.2) which, for example, indicates an error status if in red, charging status in orange and that the robot is downloading updates (see Figure 5.2) when in white.

On the other hand, the webcam cameras (3) resembling the eyes are separated by approximately seven centimeters to give the sensation of human vision and a friendlier robot expression facilitating interactions with human beings is thus achieved with the arrangement of the eyelids (6), array of LEDs (5) and webcam cameras (3).

The voice recognition system has three microphones (4) and they are arranged in a triangular configuration, two being located in a lower position and at either side of the head (1) of the robot, and another in an upper position and at equidistant from the other two.

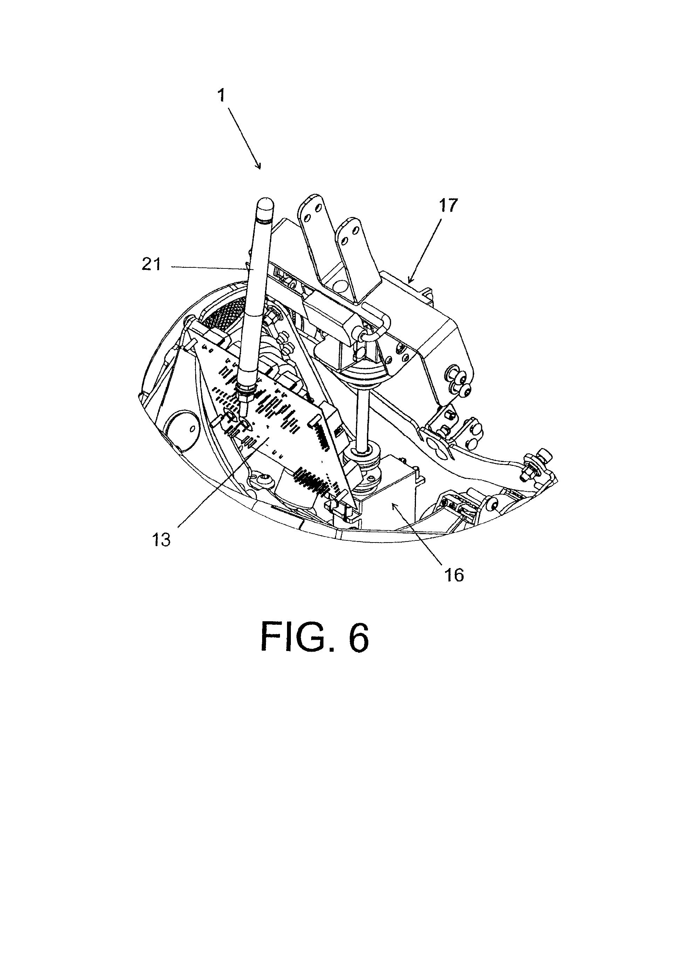

The head (1) of the robot is driven by two servomotors (16 and 17) attached to one another by means of a central shaft, the servomotor (16) performing the lateral movements of the head (1) and the servomotor (17) performing the vertical movements, the servomotor (16) is limited to a lateral movement of 180º and the servomotor (17) to a vertical movement of 70º, in order to give a better sensation of human behavior. (see Figure 6)

When the robot is in operation awaiting interaction, the three microphones (4) are ready to detect a specific noise threshold, for example, of the order of 50 dB, therefore when one of the side microphones detects that the noise threshold has been exceeded, the head (1) of the robot rotates laterally by means of the servomotor (16), being oriented towards the area where the signal has been received, at that time the webcam cameras (3) are activated and the head (1) is oriented vertically by means of the servomotor (17) until the cameras (3) focus on the face of the person speaking to it, at that time the robot is in condition to receive voice data through the upper microphone (4) and images through the webcam cameras (3), if the upper microphone (4) is the one which detects the noise threshold, the head (1) does not rotate laterally, it only rotates vertically driven by the servomotor (17) until the webcam camera (3) detect the face of the person speaking to it.

The obstacle detection system has six ultrasound sensors (8), three of them are arranged in the front part of the body (2), two in the rear part thereof and another in the lower part, such that two of the front sensors detect obstacles at either sides of the robot, the other front sensor is oriented downwards to detect obstacles or changes in height as the robot moves, the lower sensor detects whether the robot has been lifted from the ground and the two rear sensors detect obstacles throughout the rear periphery of the robot.

According to another embodiment of the invention, the obstacle detection system has four ultrasound sensors (8), two of them are arranged in the front part of the body (2), the other two in the rear part thereof, an infrared sensor oriented at a 45º angle with respect to the level of the ground being placed between the front ultrasound sensors (8). Thus, the two front ultrasound sensors (8) detect obstacles in front of and at either side of the robot, the two rear ultrasound sensors (8) detect obstacles throughout the rear periphery of the robot, and the infrared sensor detects whether the robot tumbles or has been lifted from the ground.

The wheels (9) of the system for movement located in the lower part of the robot are respectively associated with respective motors (18 and 19) provided with encoders by means of direct transmission to the axle thereof.

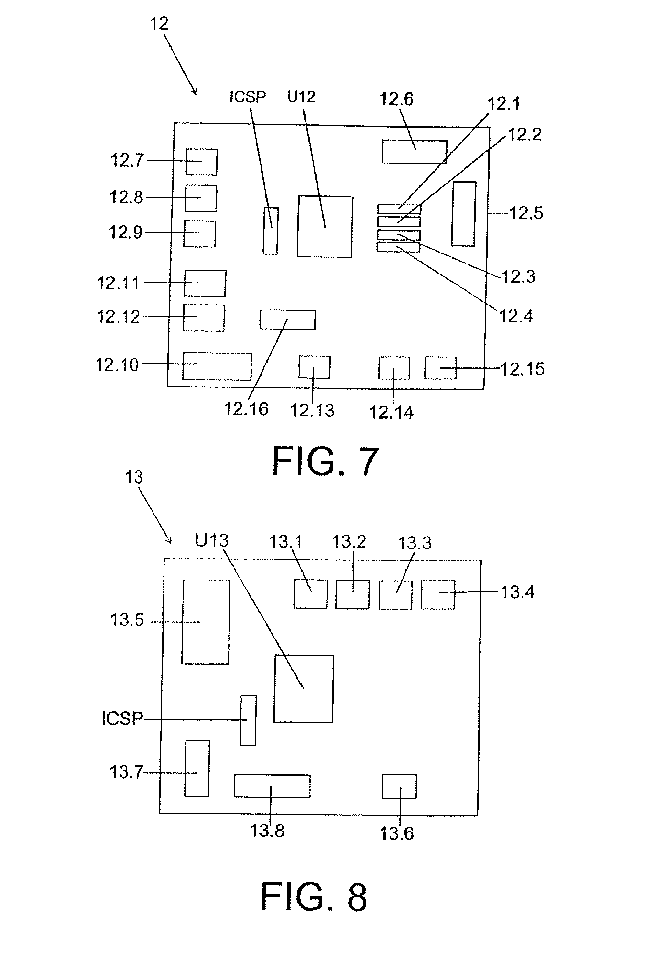

As can be observed in Figure 7, the controller board (12) has four connectors (12.1, 12.2, 12.3, 12.4) for controlling the servomotors (14, 15, 16, 17) operating the eyelids (6) of the expression system and driving the movement of the head (2), two input and output devices (12.5, 12.6) for controlling the encoders of the motors (18 and 19) of the system for movement, three ports preferably USB type ports (12.7, 12.8 and 12.9) for connecting to a WIFI device and the webcam cameras (3) of the artificial vision system, a device (12.10) for audio connection with the motherboard (11), an audio output (12.11) for the loudspeakers (7) of the speech synthesis system and an audio input (12.12) for sound from the controller board (13), as well as power supply points (12.13, 12.14, 12.15).

Likewise as observed in Figure 8, the controller board (13) has three audio inputs (13.1, 13.2, 13.3) for the microphones (4) of the voice recognition system, as well as an output (13.4) to send the audio obtained to the input (12.12) of the board (12), it also has a multi-connector (13.5) for the array of LEDs (5) of the expression system and a power supply point (13.6).

The communications between the motherboard (11) and the controller board (12), as well as between the controller boards (12 and 13) is performed through the I2C protocol, a data bus being arranged between a connector (12.16) of the board (12) and another connector (13.7) of the board (13), there is connected to this data bus the ultrasound sensors (8) of the obstacle detection system, an LCD display (18) and a digital compass (19), the signals of these last few devices are controlled by the controller board (12) and are likewise sent via I2C communication to the motherboard (11) for processing.

The LCD display (18) is located in the rear part of the body (2) of the robot and is used to know the status of same regarding variables such as the battery level, errors in the robotics platform and firmware versions, among others.

The digital compass (19) is a positioning system which allows knowing the approximate position of the robot in its environment and is responsible for bringing it as close as possible to a charging platform (not depicted) when it is in a low battery condition, and infrared LEDs in correspondence with infrared receptors (20) and which are connected to the controller board (13) through a connector (13.8) are arranged therein for the accurate coupling of the robot with the charging platform.

Both controller boards (12 and 13) have processors (U12 and U13) where basic control functions are executed respective connectors (ICSP) being arranged for programming the processors of each controller board in series.

The controller board (12) is responsible for turning the robot on and off, it receives power, generally at 12 V, through the power supply point (12.13) and supplies power to the motherboard (11) and the controller board (13) through the power supply points (12.14 and 12.15), therefore the turn off command is sent from the motherboard (11), and the controller board (12) is responsible for turning off the array of LEDs (5), the controller board (13) turns off the motherboard (11) itself and lastly turns itself off.

The robot has, in the rear part of the head (1), an antenna (21) provided with WIFI communication technology for connecting with an artificial neural network located in a remote position to which different robots are connected, such that all of them can share the information received promoting their learning.

The robot can be connected with the outside by means of the WIFI device, such that information sharing, neural network data storage, or software updates can be performed through it, the robot also has a Bluetooth device for connecting the robot with different devices such as mobile telephones, PDAs or others.

The robot has, in the rear part of the body (2), USB ports for connecting different devices, such as for example the Bluetooth device, a memory card where the operating system could be located, etc.

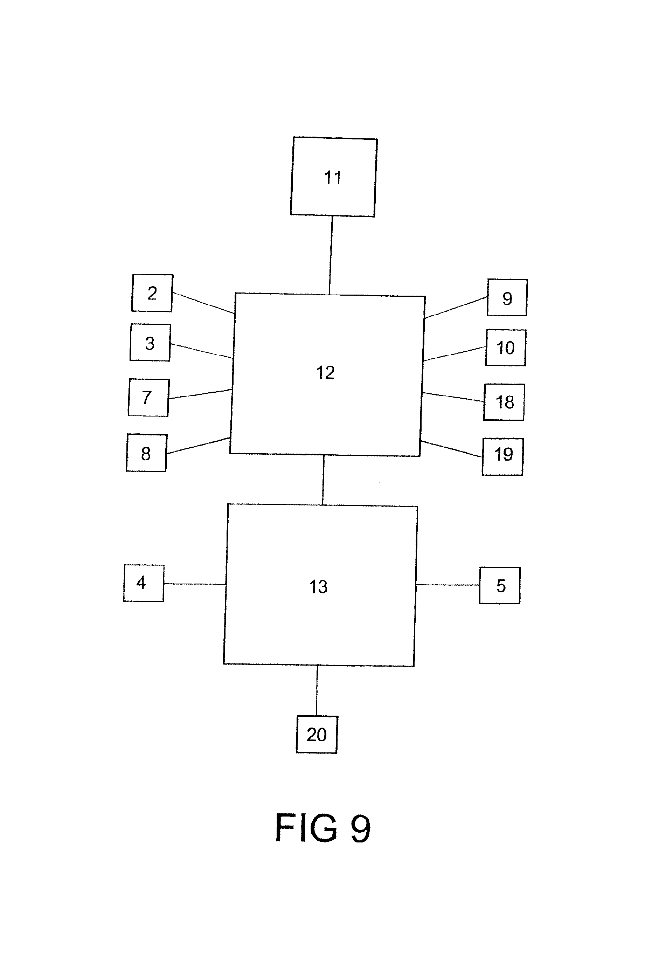

With the foregoing and as observed in the general diagram of Figure 9, the motherboard (11) controls the actions of the robot and is communicated with the controller boards (12 and 13) which have real time data of the robot's environment at all times, the controller board (12) is communicated with and receives the signals from the webcam cameras (3) of the artificial vision system, it receives the signals from the ultrasound sensors (8) of the obstacle detection system, as well as the position of the robot by means of the digital compass (19) and sends status information to the LCD display (18), it also controls the eyelids (6) of the expression system, the movement of the head (2), the loudspeakers (7) of the speech synthesis system, and the wheels (9 and 10) of the system for movement, whereas the controller board (13) is communicated with and receives the signals from the microphones (4) of the voice recognition system, controls the array of LEDs (5) of the expression system, and also receives information from the infrared receptors (20).

Since the operating system is configured in open source, all users have the chance of programming, interacting and/or modifying the different data received from all the hardware components of the robot described above, such that the robot performs the functions required by the user.

## Claims

1. A social robot of the type comprising a head (1) in which there is located an artificial vision system made up of webcam cameras (3), a voice recognition system formed by microphones (4), and an expression system; and a body (2) in which there is located a speech synthesis system made up of loudspeakers (7), an obstacle detection system made up of ultrasound sensors (8), and a system for movement formed by two working wheels (9), **characterized in that** the expression system is made up of an array of LEDs (5), formed by a plurality of LEDs (5.1) and a status led (5.2), and eyelids (6) formed by a crescent-shaped piece (6.1) associated with a cogwheel (6.2) meshing with respective servomotors (14 and 15) through a drive wheel (6.3); and **in that** the voice recognition system has three microphones (4) and they are arranged in a triangular configuration, two are located in a lower position at either sides of the head (1) and the other is located in an upper position and at equidistant from the other two.

2. The social robot according to claim 1, **characterized in that** inside the body (1) there is arranged a motherboard (11) with an open source operating system which is connected to a controller board (12) located inside the body (2) and which connects to a controller board (13) located in the rear inner part of the head (1).

3. The social robot according to claim 1, **characterized in that** the webcam cameras (3) are separated by approximately seven centimeters.

4. The social robot according to claim 1, **characterized in that** the obstacle detection system has six ultrasound sensors (8), three of them arranged in the front part of the body (2), two in the rear part thereof and another in the lower part.

5. The social robot according to claim 1, **characterized in that** the head (1) is driven by two servomotors (16 and 17), wherein the servomotor (16) performs lateral movements of the head which are limited to 180º and the servomotor (17) performs vertical movements which are limited to 70º.

6. The social robot according to claim 1, **characterized in that** the rear part of the head (1) has an antenna (21) for connecting to an artificial neural network located in a remote position.

7. The social robot according to claims 1 and 2, **characterized in that** the controller board (12) has four connectors (12.1, 12.2, 12.3, 12.4) for controlling servomotors (14, 15, 16, 17), two input and output devices (12.5, 12.6) for controlling motors (18 and 19), three USB ports (12.7, 12.8 and 12.9) for connecting to a WIFI device and the webcam cameras (3), an audio output (12.11) for the loudspeakers (7), an audio input (12.12) and power distribution points (12.13, 12.14 and 12.15).

8. The social robot according to claims 1 and 2, **characterized in that** the controller board (13) has three audio inputs (13.1, 13.2, 13.3) for the microphones (4), an audio output (13.4), a multi-connector (13.5) for the array of LEDs (5) and a power supply point (13.6).

9. The social robot according to claims 1 and 2, **characterized in that** infrared receptors (20) for the accurate coupling of the robot with a charging platform where infrared LEDs are arranged in correspondence with said infrared receptors (20) are connected by means of a connector (13.8) of the controller board (13).

10. The social robot according to claim 1, **characterized in that** the obstacle detection system has four ultrasound sensors (8), two of them are arranged in the front part of the body (2), the other two in the rear part of the body (2), an infrared sensor oriented at a 45º angle with respect to the level of the ground being placed between the front ultrasound sensors (8).
